# EUROPEAN PATENT SPECIFICATION

(11) **EP 1 603 396 B1**
(45) Date of publication and mention of the grant of the patent: **02.03.2011**
(21) Application number: 04757816.6
(22) Date of filing: 18.03.2004
(51) Int. Cl.: A01N 47/44, A01N 33/12, A61L 12/14

(54) **ANTIMICROBIAL COMPOSITIONS CONTAINING ETHANOLAMINE BUFFER AND BIGUANIDE DISINFECTANT**
ANTIMIKROBIELLE ZUSAMMENSETZUNGEN, DIE ETHANOLAMID-PUFFER UND BIGUANID-DESINFEKTIONSMITTEL ENTHALTEN
COMPOSITIONS ANTIMICROBIENNES CONTENANT UN TAMPON A BASE D'ETHANOLAMINE ET UN DESINFECTANT A BASE DE BIGUANIDE

(30) Priority: 19.03.2003 US 392745
(43) Date of publication of application: 14.12.2005
(73) Proprietor: BAUSCH & LOMB INCORPORATED, Rochester, New York 14604-2701 (US)
(72) Inventor: HU, Zhenze, Pittsford, NY 14534 (US); SALAMONE, Joseph, C., Fairport, NY 14450 (US)
(74) Representative: Maiwald, Walter
(86) International application number: PCT/US2004/008306
(87) International publication number: WO 2004/084626

(56) References cited:
- EP-A- 0 575 290
- EP-A- 0 888 780
- EP-A- 1 025 967
- WO-A-00/12663
- WO-A-02/23990
- WO-A-92/11876
- WO-A-93/15173
- WO-A-98/25649
- DE-A- 19 741 910
- US-A- 5 260 021
- US-A- 5 284 875

## Description

### Field of the Invention:

The present invention is directed toward the use of a combination of triethanolamine buffer and one or more antimicrobial agents selected from the group consisting of poly(hexamethylene Biguanide) and 1,1'hexamethylene-bis[5-(2-ethylhexyl)Biguanide] and polyquaternium-1 for disinfection and preservation. More particularly, the present invention is directed toward the use of such combinations to enhance disinfection and preservation of ophthalmic solutions and devices.

### Background of the Invention:

Contact lenses in wide use today fall into two general categories, hard and soft. The hard or rigid corneal type lenses are formed from materials prepared by the polymerization of acrylic esters, such as poly(methyl methacrylate) (PMMA). The gel, hydrogel or soft type lenses are made by polymerizing such monomers as 2-hydroxyethyl methacrylate (HEMA) or, in the case of extended wear lenses, by polymerizing silicon-containing monomers or macromonomers. Both the hard and soft types of contact lenses are exposed to a broad spectrum of microbes during normal wear and become soiled relatively quickly. Contact lenses whether hard or soft therefore require routine cleaning and disinfecting. Failure to routinely clean and disinfect contact lenses properly can lead to a variety of problems ranging from mere discomfort when being worn to serious ocular infections. Ocular infections caused by virulent microbes such as *Pseudomonas aeroginosa* can lead to loss of the infected eye(s) if left untreated or if allowed to reach an advanced stage before initiating treatment.

U.S. Patent Number 4,758,595 discloses a contact lens disinfectant and preservative containing a biguanide or a water-soluble salt thereof in combination with a buffer, preferably a borate buffer, e.g., boric acid, sodium borate, potassium tetraborate, potassium metaborate or mixtures of the same.

U.S. Patent Number 4,361,548 discloses a contact lens disinfectant and preservative containing dilute aqueous solutions of a polymer; namely, dimethyldiallylammonium chloride (DMDAAC) having molecular weights ranging from about 10,000 to 1,000,000. Amounts of DMDAAC homopolymer as low as 0.00001 percent by weight may be employed when an enhancer, such as thimerosal, sorbic acid or phenylmercuric salt is used therewith. Although lens binding and concomitant eye tissue irritation with DMDAAC were reduced, it was found in some users to be above desirable clinical levels.

WO 98/25649 describes a method of enhancing the antimicrobial activity of an ophthalmic composition containing a borate compound which comprises adding to the composition an effective amount of a low weight amino alcohol.

EP 0 575 290 relates to products for care of contact lenses containing an aminopropylbiguanide or a salt thereof.

Disinfectant compositions containing at least one amine or **quaternary** ammonium salt and at least one alkanolamine or corresponding salt thereof are disclosed in WO 02/23990.

WO 92/11876 describes a method for disinfecting a contact lens comprising contacting the lens with an isotonic aqueous solution comprising 0.6 to 2 weight percent tromethamine or its ophthalmically acceptable salts for a time sufficient to disinfect the lens.

A treating composition for a contact lens for preventing a contact lens being stained, especially with a proteinaceous substance, is disclosed in EP 0 888 780. The treating solution is characterized by including at least one compound selected from the group consisting of 2-amino-2-methyl-1,3-propanediol, 2-amino-2-methyl-1-propanol and salts thereof, and an effective amount of protease.

US 5,260,021 relates to an antimicrobial composition in the form of a gel for disinfecting contact lenses. The composition comprises hydrogen peroxide as disinfectant and a gelling component.

WO 00/12663 describes an improved stable liquid enzyme composition for cleaning contact lenses. The aqueous composition comprises an enzyme, one or more polyols, a borate/boric acid compound and calcium ions.

Despite the availability of various commercially available contact lens disinfecting systems such as heat, hydrogen peroxide, biguanides, polymeric biguanides, quaternary ammonium polyesters, amidoamines and other chemical agents, there continues to be a need for improved disinfecting systems. Such improved disinfecting systems include systems that are simple to use, are effective against a broad spectrum of microbes, are non-toxic and do not cause ocular irritation as the result of binding to the contact lens material. There is a particular need in the field of contact lens disinfection and ophthalmic composition preservation for safe and effective chemical agents with antimicrobial activity.

### Summary of the Invention:

The present invention relates to improved antimicrobial compositions for disinfecting medical devices, such as, for example, but not limited to contact lenses. More particularly, the present invention relates to the use of an triethanolamine buffer in ophthalmic solutions. It has been found that compositions including triethanolamine buffer exhibit excellent disinfecting and/or preservative effect, surprisingly without the aid of a borate buffer. The antimicrobial compositions of the present invention likewise stabilize proteins already deposited on worn contact lenses to improve the wearing comfort for contact lens wearers. The antimicrobial compositions of the present invention are also useful for preservation of ophthalmic compositions such as pharmaceuticals, artificial tears and comfort drops against microbial contamination.

The subject antimicrobial compositions are effective in the manufacture of disinfecting systems that are non-toxic, simple to use and do not cause ocular irritation.

Accordingly, it is an object of the present invention to provide compositions useful as antimicrobial agents in the manufacture of ophthalmic disinfecting systems.

Another object of the present invention is to provide a method for using antimicrobial compositions in the disinfection of medical devices.

Another object of the present invention is to provide antimicrobial compositions useful in ophthalmic systems for disinfecting contact lenses.

Another object of the present invention is to provide antimicrobial compositions useful in preserving ophthalmic systems from microbial contamination.

Another object of the present invention is to provide antimicrobial compositions useful in ophthalmic systems for disinfecting contact lenses with reduced or eliminated eye irritation.

Another object of the present invention is to provide a method of making antimicrobial compositions useful in ophthalmic systems.

Still another object of the present invention is to provide a method of making antimicrobial compositions useful as disinfecting and preservative agents.

These and other objectives and advantages of the present invention, some of which are specifically described and others that are not, will become apparent from the detailed description and claims that follow.

### Detailed Description of the Invention:

The compositions of the present invention can be used with all contact lenses such as conventional hard and soft lenses, as well as rigid and soft gas permeable lenses. Such suitable lenses include both hydrogel and non-hydrogel lenses, as well as silicone and fluorine-containing lenses. Of primary interest are soft lenses fabricated from a material having a proportion of hydrophilic repeat units such that the water content of the lens during use is at least 20 percent by weight. The term "soft contact lens" as used herein generally refers to those contact lenses that readily flex under small amounts of force. Typically, soft contact lenses are formulated from polymers having a certain proportion of repeat units derived from monomers such as 2-hydroxyethyl methacrylate and/or other hydrophilic monomers, typically crosslinked with a crosslinking agent. However, newer soft lenses, especially for extended wear, are being made from high-Dk silicone-containing materials.

Compositions of the present invention comprise one or more antimicrobial agents such as one or more biguanides as a disinfectant or preservative, and triethanolamine as a buffering agent. It is surprising that the subject antimicrobial compositions exhibit excellent disinfecting and/or preservative effect without the aid of borate, which is contrary to the teachings of U.S. Patent Number 4,758,595.

The antimicrobial compositions of the present invention are useful for disinfecting medical devices, particularly those soiled with proteinaceous matter. The antimicrobial compositions of the present invention are also useful in contact lens care solutions for disinfecting contact lenses. Compositions of the present invention are preferably in solution in sufficient concentration to destroy harmful microorganisms on the surface of a contact lens within the recommended minimum soaking time. The recommended minimum soaking time is included in the package instructions for use of the solution. The term "disinfecting solution" does not exclude the possibility that the solution may also be useful as a preserving solution, or that the disinfecting solution may be useful for other purposes such as daily cleaning, rinsing, and storage of contact lenses, depending on the particular formulation containing the subject compositions. Additionally, compositions of the present invention can be used in conjunction with other known disinfecting or preserving compounds if desired.

Solutions according to the present invention are physiologically compatible. Specifically, the solution must be "ophthalmically safe" for use with a contact lens, meaning that a contact lens treated with the solution is generally suitable and safe for direct placement on the eye without rinsing, that is, the solution is safe and comfortable for daily contact with the eye via a contact lens that has been wetted with the solution. An ophthalmically safe solution has a tonicity and pH that is compatible with the eye and comprises materials, and amounts thereof, that are non-cytotoxic according to ISO (International Standards Organization) standards and U.S. FDA (Food and Drug Administration) regulations. The solution should be sterile in that the absence of microbial contaminants in the product prior to release must be statistically demonstrated to the degree necessary for such products.

Compositions of the present invention include one or more antimicrobial agents, present in a total amount of from 0.000001 to 0.05 percent by weight based on the total weight of the composition, and selected from the group consisting of 1,1'-hexamethylene-bis[5-(p-chlorophenyl)biguanide] (Chlorhexidine) or water soluble salts thereof, 1,1'-hexamethylene-bis[5-(2-ethylhexyl)biguanide] (Alexidine) or water soluble salts thereof, poly(hexamethylene biguanide) or water soluble salts thereof, and polyquaternium-1. Biguanides are described in U.S. Patent Numbers: 5,990,174; 4,758,595 and 3,428,576. The preferred antimicrobial agents due to their ready commercial availability are poly(aminopropyl biguanide) (PAPB), also commonly referred to as poly(hexamethylene biguanide) (PHMB), and 1,1'-hexamethylene-bis[5-(2-ethylhexyl)biguanide] (Alexidine).

Compositions of the present invention include triethanolamine buffer, present in a total amount of from 0.02 to 3.0 percent by weight based on the total weight of the composition.

Compositions of the present invention may likewise include at least one surfactant that has known advantages in terms of cleaning efficacy and comfort. Suitable surfactants include for example but are not limited to polyethers based upon poly(ethylene oxide)-poly(propylene oxide)-poly(ethylene oxide), i.e., (PEO-PPO-PEO), or poly(propylene oxide)-poly(ethylene oxide)-poly(propylene oxide), i.e., (PPO-PEO-PPO),or a combination thereof. PEO-PPO-PEO and PPO-PEO-PPO are commercially available under the trade names Pluronics^{™}, R-Pluronics^{™}, Tetronics^{™} and R-Tetronics^{™} (BASF Wyandotte Corp., Wyandotte, Michigan) and are further described in U.S. Patent Number 4,820,352 incorporated herein in its entirety by reference. Suitable surfactants for use in the present composition should be soluble in the lens care solution, not become turbid, and should be non-irritating to eye tissues.

Likewise, it may be desirable to include one or more water-soluble viscosity agents in the subject composition. Because of the demulcent effect of viscosity agents, the same have a tendency to enhance the lens wearer's comfort by means of a film on the lens surface cushioning impact against the eye. Suitable viscosity agents include for example but are not limited to cellulose polymers like hydroxyethyl or hydroxypropyl cellulose, carboxymethyl cellulose, povidone, polyvinyl alcohol and the like. Viscosity agents may be employed in amounts ranging from about 0.01 to about 4.0 weight percent or less.

Compositions of the present invention when in solution may likewise include one or more buffers, or a buffering system in addition to the triethanolamine buffer, to adjust the final pH of the solution. Suitable buffers include for example but are not limited to phosphate buffers, borate buffers, tris(hydroxymethyl)aminomethane (Tris) buffers, bis(2-hydroxyethyl)-imino-tris(hydroxymethyl)methane (bis-Tris) buffers, sodium bicarbonate, and combinations thereof. A suitable buffering system for example may include at least one phosphate buffer and at least one borate buffer, which buffering system has a buffering capacity of 0.01 to 0.5 mM, preferably 0.03 to 0.45, of 0.01 N of HCl and 0.01 to 0.3, preferably 0.025 to 0.25, of 0.01 N of NaOH to change the pH one unit. Buffering capacity is measured by a solution of the buffers only. The pH of lens care solutions of the present invention is preferably maintained within the range of 5.0 to 8.0, more preferably about 6.0 to 8.0, most preferably about 6.5 to 7.8.

Compositions of the present invention may likewise include one or more tonicity agents to approximate the osmotic pressure of normal lachrymal fluids which is equivalent to a 0.9 percent solution of sodium chloride or 2.5 percent glycerin solution. Examples of suitable tonicity agents include but are not limited to sodium and potassium chloride, dextrose, mannose, glycerin, calcium and magnesium chloride. These agents are typically used individually in amounts ranging from about 0.01 to 2.5 percent w/v and preferably, from about 0.2 to about 1.5 percent w/v. Preferably, the tonicity agent is employed in an amount to provide a final osmotic value of 200 to 450 mOsm/kg and more preferably between about 220 to about 350 mOsm/kg, and most preferably between about 220 to about 320 mOsm/kg.

Compositions of the present invention may likewise include one or more sequestering agents to bind metal ions, which in the case of ophthalmic solutions, might otherwise react with protein deposits and collect on contact lenses. Suitable sequestering agents include for example but are not limited to ethylenediaminetetraacetic acid (EDTA) and its salts. Sequestering agents are preferably used in amounts ranging from about 0.01 to about 0.2 weight percent.

The biguanide-based compositions of the present invention are described in still greater detail in the examples that follow.

### Example 1 Preparation and Testing of Biguanide-Based Compositions With and Without Triethanolamine (TEA):

A test was conducted to study the microbiocidal efficacy of solutions prepared according to the present invention with TEA as compared to the same solutions prepared without TEA. The test solutions are identified below in Table 1. The antimicrobial efficacy of each of the solutions for the chemical disinfection of contact lenses was evaluated. Microbial challenge inoculums were prepared using *Pseudomonas aeruginosa* (ATCC 9027), *Staphylococcus aureus* (ATCC 6538), *Serratia marcescens* (ATCC 13880), *Candida albicans* (ATCC 10231) and *Fusarium solani* (ATCC 36031). The test organisms were cultured on appropriate agar and the cultures were harvested using sterile Dulbecco's Phosphate Buffered Saline plus 0.05 percent weight/volume polysorbate 80 (DPBST) or a suitable diluent and transferred to a suitable vessel. Spore suspensions were filtered through sterile glass wool to remove hyphal fragments. *Serratia marcescens,* as appropriate, was filtered through a 1.2 mu filter to clarify the suspension. After harvesting, the suspension was centrifuged at no more than 5000 x g for a maximum of 30 minutes at 20 to 25 degrees Celsius. The supernatent was poured off and resuspended in DPBST or other suitable diluent. The suspension was centrifuged a second time, and resuspended in DPBST or other suitable diluent. All challenge bacterial and fungal cell suspensions were adjusted with DPBST or other suitable diluent to 1 x 10⁷ to 1 × 10⁸ cfu/mL. The appropriate cell concentration may be estimated by measuring the turbidity of the suspension, for example, using a spectrophotometer at a preselected wavelength, for example 490 nm. One tube was prepared containing a minimum of 10 mL of test solution per challenge organism. Each tube of the solution to be tested was inoculated with a suspension of the test organism sufficient to provide a final count of 1 × 10⁵ to 1 × 10⁶ cfu/mL, the volume of the inoculum not exceeding 1 percent of the sample volume. Dispersion of the inoculum was ensured by vortexing the sample for at least 15 seconds. The inoculated product was stored at 10 to 25 degrees Celsius. Aliquots in the amount of 1.0 mL were taken of the inoculated product for determination of viable counts after certain time periods of disinfection. The time points for the bacteria were, for example, 1, 2, 3 and 4 hours when the proposed regimen soaking time was four hours. Yeast and mold were tested at an additional timepoint of 16 hours (4 times the regimen time). The suspension was mixed well by vortexing vigorously for at least 5 seconds. The 1.0 mL aliquots removed at the specified time intervals were subjected to a suitable series of decimal dilutions in validated neutralizing media. The suspensions were mixed vigorously and incubated for a suitable period of time to allow for neutralization of the microbial agent. The viable count of organisms was determined in appropriate dilutions by preparation of triplicate plates of trypticase soy agar (TSA) for bacteria and Sabouraud dextrose agar (SDA) for mold and yeast. The bacterial recovery plates were incubated at 30 to 35 degrees Celsius for two to four days. The yeast recovery plates were incubated at 20 to 30 degrees Celsius for two to four days. The mold recovery plates were incubated at 20 to 25 degrees Celsius for three to seven days. The average number of colony forming units was determined on countable plates. Countable plates refer to 30 to 300 cfu/plates for bacteria and yeast, and 8 to 80 cfu/plates for mold except when colonies are observed only for the 10⁰ or 10⁻¹ dilution plates. The microbial reduction was then calculated at the specified time points and recorded as set forth below in Table 2. In order to demonstrate the suitability of the medium used for growth of test organisms and to provide an estimation of the initial inoculum concentration, inoculum controls were made by dispersing an identical aliquot of the inoculum into a suitable diluent, for example DPBST, using the same volume of diluent used to suspend the organism listed above. Following inoculation in a validated neutralizing broth and incubation for an appropriate period of time, the inoculum control must be between 1.0 × 10⁵ to 1.0 × 10⁶ cfu/mL. The solutions were evaluated based on the performance requirement referred to as the "Stand-Alone Procedure for Disinfecting Products" (Stand-Alone Test) and is based on the Disinfection Efficacy Testing for contact lens care products under the Premarket Notification (510(k)) Guidance Document for Contact Lens Care Products dated May 1, 1997, prepared by the U.S. Food and Drug Administration, Division of Ophthalmic Devices. This performance requirement does not contain a rub procedure. This performance requirement is comparable to current ISO standards for disinfection of contact lenses (revised 1995). The Stand-Alone Test challenges a disinfecting product with a standard inoculum of a representative range of microorganisms and establishes the extent of viability loss at predetermined time intervals comparable with those during which the product may be used. The primary criteria for a given disinfection period, corresponding to a potential minimum recommended disinfection period, is that the number of bacteria recovered per mL must be reduced by a mean value of not less than 3.0 logs within the given disinfection period. The number of mold and yeast recovered per ml must be reduced by a mean value of not less than 1.0 log within the minimum recommended disinfection time with no increase at four times the minimum recommended disinfection time.

**TABLE 1**

| **Test Solutions With and Without Triethanolamine** | | | | | | |
|---|---|---|---|---|---|---|
| **Ingredients (w/w%)** | **A** | **B** | **C** | **D** | **E** | **F** |
| Triethanolamine HCL | 0.7 | 0.7 | 0.7 | 0 | 0.7 | 0.7 |
| Pluronic F127 | 1 | 0 | 1 | 1 | 1 | 1 |
| Pluronic P123 | 0.2 | 0 | 0.2 | 0.2 | 0.2 | 0.2 |
| EDTA | 0.025 | 0.025 | 0.025 | 0.025 | 0.025 | 0.025 |
| Glycerin | 0.6 | 0.6 | 0 | 0.6 | 0.6 | 0.6 |
| NaCl | 0.132 | 0.132 | 0.327 | 0.358 | 0.202 | 0.132 |
| AMPD | 0.2107 | 0.2107 | 0.2107 | 0.2107 | 0 | 0 |
| PHMB (ppm) | 1 | 1 | 1 | 1 | 1 | 1 |
| pH | 7.1 | 7.12 | 7.09 | 7.13 | 7.11 | 7.07 |
| Osmolality (mOsm/Kg) | 226 | 216 | 219 | 231 | 222 | 238 |

**TABLE 2**

| **Log Reduction After 4 Hour Exposure to Test Solutions** | | | | | | |
|---|---|---|---|---|---|---|
| **Agent** | **A** | **B** | **C** | **D** | **E** | **F** |
| *S. aureus* | 4.2 | 3.5 | >4.5 | >4.5 | >4.5 | 4.5 |
| *P. aeruginosa* | >4.5 | 4.0 | >4.5 | >4.6 | >4.5 | >4.5 |
| *S. marcescens* | >4.6 | 3.4 | 4.3 | 1.4 | 4.4 | >4.6 |
| *C*. *albicans* | 2.2 | 2.1 | 1.1 | >4.5 | 1.7 | 2.1 |
| *F. solani* | 4.1 | 3.3 | 3.2 | 2.7 | 3.7 | >4.3 |

Denaturing of tear proteins on soft contact lenses is a common problem. Once proteins denature on the lens, they are difficult to remove, reduce lens clarity, may cause allergic reactions for the wearer, and can act as attachment sites for infectious microorganisms. Lysozyme, especially is a potentially troublesome tear protein insofar as high water, about 55 percent water, contact lenses are concerned because lysozyme is a positively charged protein that is readily attracted to the negatively charged lens surface. An in vitro assay was developed to determine the ability of a test solution to retard lysozyme denaturing. In this assay, a 1% stock solution of lysozyme in isotonic borate buffered saline (pH = 7.0) is freshly prepared, and an aliquot of this stock solution is mixed with an equal aliquot of a test solution. The resulting mixture is heated at 75 degrees Celsius for 15 minutes in a hot water bath. After the mixture is removed from the heating bath, it is allowed to cool to room temperature before it is visually inspected for signs of protein denaturing as evidenced by the formation of a white precipitate. The following scale was used to measure the extent of protein stabilization.

| | |
|---|---|
| +++++ | Clear solution |
| ++++ | Slightly hazy solution |
| +++ | Hazy solution |
| ++ | Slight precipitation |
| + | Significant precipitation |

The results obtained for solutions of Table 1 above are set forth below in Table 3.

**TABLE 3**

| **Protein Stabilization** | | | | | | |
|---|---|---|---|---|---|---|
| | **A** | **B** | **C** | **D** | **E** | **F** |
| Protein Stabilization | +++++ | ++++ | +++++ | +++ | +++++ | +++++ |

### Example 2 - Preparation and Testing of Biguanide-Based Compositions With Mono- vs. Di- vs. Tri- Ethanolamine Buffers:

A test was conducted to study the microbiocidal efficacy of solutions prepared according to the present invention with mono-, di- or triethanolamine. The test solutions are identified below in Table 4. The antimicrobial efficacy of each of the solutions for the chemical disinfection of contact lenses was evaluated. Microbial challenge inoculums were prepared as described above in Example 1. The microbial reduction was then calculated at the specified time points and recorded as set forth below in Table 5. In order to demonstrate the suitability of the medium used for growth of test organisms and to provide an estimation of the initial inoculum concentration, inoculum controls were made as described above in Example 1.

**TABLE 4**

| **Test Solutions With Mono- vs. Di- vs. Tri- Ethanolamine** | | | |
|---|---|---|---|
| **Ingredients (w/w%)** | **G** | **H** | **I** |
| Triethanolamine 99% | 1.356 | 0 | 0 |
| Diethanolamine 99.9% | 0 | 0.947 | 0 |
| Monoethanolamine 99.9% | 0 | 0 | 0.55 |
| Pluronic F127 | 1 | 1 | 1 |
| Pluronic P123 | 0.2 | 0.2 | 0.2 |
| EDTA | 0.025 | 0.025 | 0.025 |
| NaCl | 0.159 | 0.069 | 0.126 |
| 1 N HCL | Adjust to pH 7.1 | Adjust to pH 7.1 | Adjust to pH 7.1 |
| PHMB (ppm) | 1 | 1 | 1 |
| pH | 7.14 | 7.16 | 7.07 |
| Osmolality (mOsm/Kg) | 220 | 218 | 217 |

**TABLE 5**

| **Log Reduction After 4 Hour Exposure to Test Solutions** | | | |
|---|---|---|---|
| **Agent** | **G** | **H** | **I** |
| *S. aureus* | >4.7 | >4.7 | >4.7 |
| *P. aeruginosa* | 4.5 | >4.5 | >4.5 |
| *S. marcescens* | 4.5 | >4.5 | 3.9 |
| *C. albicans* | 1.5 | 1.5 | 1.2 |
| *F. solani* | 3.4 | 4.2 | >4.4 |

An in vitro assay was developed as described above in Example 1 to determine the ability of a test solution to retard lysozyme denaturing. The same scale was used to measure the extent of protein stabilization as that used in Example 1. The results obtained for the solutions of Table 4 above, are set forth below in Table 6.

**TABLE 6**

| **Protein Stabilization** | | | |
|---|---|---|---|
| | **G** | **H** | **I** |
| Protein Stabilization | +++++ | ++++ | + |

### EXAMPLE 3 - Preparation and Testing of Biguanide-Based Compositions With Triethanolamine Buffer and Aminoalcohol Buffer Combination:

A test was conducted to study the microbiocidal efficacy of solutions prepared according to the present invention with TEA buffer in combination with another aminoalcohol buffer. The test solutions are identified below in Table 7. The antimicrobial efficacy of each of the solutions for the chemical disinfection of contact lenses was evaluated. Microbial challenge inoculums were prepared as described above in Example 1. The microbial reduction was then calculated at the specified time points and recorded as set forth below in Table 8. In order to demonstrate the suitability of the medium used for growth of test organisms and to provide an estimation of the initial inoculum concentration, inoculum controls were made as described above in Example 1.

**TABLE 7**

| **Test Solutions With Triethanolamine and Aminoalcohol Combination** | | | | |
|---|---|---|---|---|
| **Ingredients (w/w%)** | **J** | **K** | **L** | **M** |
| Triethanolamine HCL | 0.7 | 0.7 | 0.7 | 0.7 |
| Pluronic F127 | 1 | 1 | 1 | 1 |
| Pluronic P123 | 0.2 | 0.2 | 0.2 | 0.2 |
| EDTA | 0.025 | 0.025 | 0.025 | 0.025 |
| Glycerin | 0.6 | 0.6 | 0.6 | 0.6 |
| NaCl | 0.132 | 0.132 | 0.132 | 0.159 |
| PHMB (ppm) | 1 | 1 | 1 | 1 |
| Tris | 0.2428 | 0 | 0 | 0 |
| AMPD | 0 | 0.2107 | 0 | 0 |
| AMP | 0 | 0 | 0.1787 | 0 |
| Bis-Tris | 0 | 0 | 0 | 0.4193 |
| pH | 7.1 | 7.11 | 7.11 | 7.11 |
| Osmolality (mOsmo/Kg) | 218 | 221 | 222 | 223 |

**TABLE 8**

| **Log Reduction After 4 Hour Exposure to Test Solutions** | | | | |
|---|---|---|---|---|
| **Agent** | **J** | **K** | **L** | **M** |
| *S*. *aureus* | >4.5 | >4.5 | >4.5 | >4.5 |
| *P. aeruginosa* | 3.1 | >4.6 | >4.6 | >4.6 |
| *S. marcescens* | 3.6 | 4.4 | >4.6 | 4.4 |
| *C. albicans* | 1.7 | 3.2 | 3.9 | 3.4 |
| *F. solani* | 3.7 | >4.4 | >4.4 | 3.7 |

An in vitro assay was developed as described above in Example 1 to determine the ability of a test solution to retard lysozyme denaturing. The same scale was used to measure the extent of protein stabilization as that used in Example 1 above. The results obtained for solutions of Table 7 above are set forth below in Table 9.

**TABLE 9**

| **Protein Stabilization** | | | | |
|---|---|---|---|---|
| | **J** | **K** | **L** | **M** |
| Protein Stabilization | +++++ | +++++ | +++++ | +++++ |

### EXAMPLE 4 - Preparation and Testing of Alexidine-Based Compositions With Borate Buffer, Surfactant and Polyquaternium-10 (Polymer JR) Combination:

A test was conducted to study the microbiocidal efficacy of alexidine-based solutions with borate, surfactant and polyquaternium-10 (Polymer JR). The test solutions are identified below in Table 10. The antimicrobial efficacy of each of the solutions for the chemical disinfection of contact lenses was evaluated. Microbial challenge inoculums were prepared as described above in Example 1. The microbial reduction was then calculated at the specified time points and recorded as set forth below in Table 11. In order to demonstrate the suitability of the medium used for growth of test organisms and to provide an estimation of the initial inoculum concentration, inoculum controls were made as described above in Example 1.

**TABLE 10**

| **Test Solutions With Borate, Surfactant And Polymer JR Combination** | | | | | |
|---|---|---|---|---|---|
| **Ingredients (w/w%)** | **O** | **P** | **Q** | **R** | **S** |
| TEA HCl 99.5% | 0.937 | 0.937 | 0.937 | 0.937 | 0.937 |
| TEA 98% | 0.149 | 0.149 | 0.149 | 0.149 | 0.149 |
| Sodium Borate | 0 | 0 | 0.1 | 0.1 | 0.1 |
| Boric Acid | 0 | 0 | 0.66 | 0.66 | 0.66 |
| Pluronic F127 | 1 | 1 | 1 | 2 | 2 |
| Pluronic P123 | 0.2 | 0.2 | 0.2 | 0 | 0 |
| Tetronic 1107 | 0 | 0 | 0 | 1 | 1 |
| EDTA | 0.025 | 0.025 | 0.025 | 0.025 | 0.025 |
| Glycerin | 0.6 | 0.6 | 0 | 0 | 0 |
| NaCl | 0.114 | 0.114. | 0 | 0 | 0 |
| Polymer JR 30 M | 0 | 0 | 0 | 0 | 0.02 |
| PHMB (ppm) | 1 | 0 | 0 | 0 | 0 |
| Alexidine (ppm) | 0 | 4.5 | 4 | 4 | 4 |
| pH | 7.17 | 7.14 | 6.69 | 6.72 | 6.71 |
| Osmolality (mOsm/Kg) | 217 | 220 | 223 | 229 | 231 |

**TABLE 11**

| **Log Reduction After 4 Hour Exposure to Test Solutions** | | | | | |
|---|---|---|---|---|---|
| **Agent** | **O** | **P** | **Q** | **R** | **S** |
| *S. aureus* | >4.6 | >4.7 | >4.7 | >4.7 | >4.7 |
| *P. aeruginosa* | >4.6 | >4.6 | >4.6 | >4.6 | >4.6 |
| *S. marcescens* | >4.5 | >4.7 | >4.7 | >4.7 | >4.7 |
| *C. albicans* | 3.0 | 4.7 | >4.7 | >4.7 | >4.7 |
| *F. solani* | >4.3 | >4.2 | >4.2 | >4.2 | >4.2 |

A sodium fluorescein permeability assay was conducted on Solution O of Table 10. To do this, a 0.5 mL cell suspension containing 2 x 10⁵ cells was seeded in Millicell^{™} HA 13 mm inserts (Millipore, Bedford, Massachusetts). The inserts were transferred into 24 well plates containing 0.5 mL of minimum essential medium (MEM) (BioWittaker, Walkersville, Maryland) per well. The plates were then incubated at 37 degrees Celsius with 5 percent carbon dioxide for six days. Fresh media was added to the wells on days 2 through 6. On day 6 the inserts were used for the sodium fluorescein permeability assay.

Each insert was gently rinsed three times with 1 mL of Hank's balanced salt solution (HBSS) using a 10 mL syringe, without a needle. An amount of 0.5 mL of test solution was added to separate inserts that had been placed in a fresh 24 well plate. Triplicate inserts were used for each test solution. The inserts were incubated in a 100 percent humidified chamber at 37 degrees Celsius for twenty minutes. Each series of triplicate samples was handled sequentially to allow exact timing of the treatment and subsequent steps. After incubation, each insert was individually rinsed five times with 1 mL HBSS using a 10 mL syringe without a needle, and then placed in a fresh 24 well plate containing 0.5 mL HBSS in each well. To each insert was added 0.5 mL of sodium fluorescein (3 mg/100 mL in HBSS). The inserts were incubated at room temperature for twenty minutes, removed from the wells, and the amount of sodium fluorescein was measured using a fluorometer at 540 nm excitation and 590 nm emission. The results obtained from solutions of Table 10 are recorded below in Table 12. Triplicate negative controls (HBSS solution) and positive controls consisting of sodium dodecyl sulfate (SDS) in water were included during these evaluations.

**TABLE 12**

| **Formulation** | **Fluorescence Units** |
|---|---|
| HBSS (Negative Control) | 55 ± 3 |
| SDS (Positive Control) | 1457 ± 102 |
| Solution O | 41 ± 2 |

Triethanolamine and biguanide compositions of the present invention are useful as antimicrobial agents in contact lens care solutions for disinfecting contact lenses. A disinfecting amount of antimicrobial agent is an amount that will at least partially reduce the microorganism population in the formulations employed. Preferably, a disinfecting amount is that which will reduce the microbial burden of representative bacteria by two log orders in four hours and more preferably by one log order in one hour. Most preferably, a disinfecting amount is an amount which will eliminate the microbial burden on a contact lens when used according to its regimen for the recommended soaking time (FDA Chemical Disinfection Efficacy Test - July 1985 Contact Lens Solution Draft Guidelines). Typically, such agents are present in concentrations ranging from about 0.00001 to about 0.5 percent weight/volume (w/v), and more preferably, from about 0.00003 to about 0.5 percent w/v.

As stated above, contact lenses are disinfected by contacting the lens with a solution of the present composition. Although this may be accomplished by simply soaking a lens in the subject solution, greater cleaning can be achieved if a few dorps of the solution are initially placed on each side of the lens, and rubbing the lens for a period of time, for example, approximately 20 seconds. The lens can then be subsequently immersed within several milliliters of the subject solution. Preferably, the lens is permitted to soak in the solution for at least four hours. The lenses are then removed from the solution, rinsed with the same or a different solution, for example a preserved isotonic saline solution and then replaced on the eye.

Solutions containing one or more compositions of the present invention may be formulated into specific contact lens care products for use as customary in the field of ophthalmology. Such products include but are not limited to wetting solutions, soaking solutions, cleaning and conditioning solutions, as well as multipurpose type lens care solutions and in-eye cleaning and conditioning solutions.

## Claims

1. An antimicrobial composition comprising triethanolamine buffer in an amount ranging from 0.02 wt.-% to 3 wt.% and one or more antimicrobial agents selected from the group consisting of poly(hexamethylene biguanide) and 1,1'-hexamethylene-bis[5-(2-ethylhexyl)biguanide] and polyquaternium-1.

2. A method of producing a composition of claim 1 comprising:
combining triethanolamine buffer with the one or more antimicrobial agents selected.

3. The composition of claim 1 further comprising one or more additional buffers or buffering systems.

4. The composition of any of claims 1 and 3 further comprising one or more tonicity agents.

5. The composition of any of claims 1, 3 and 4 further comprising one or more surfactants.

6. The composition of any of claims 1, 3, 4 and 5 further comprising one or more viscosity agents.

7. A method of using the composition of any of claims 1, 3, 4, 5 and 6 comprising:
contacting a surface of a contact lens with said composition for a period of time suitable to eliminate a microbial burden on said contact lens.

8. A method of producing the composition of any of claims 1, 3, 4, 5 and 6 comprising:
adding an effective disinfecting amount of said one or more antimicrobial agents and triethanolamine buffer to the composition.

9. A method of producing the composition of any of claims 1, 3, 4, 5 and 6 comprising:
adding an effective preservative amount of said one or more antimicrobial agents and said triethanolamine buffer to the composition.

10. A method of using the composition of any of claims 1, 3,4, 5 and 6 comprising:
contacting a surface of a medical device with said composition for a period of time suitable to eliminate a microbial burden on said medical device.

## Patentansprüche

1. Eine antimikrobielle Zusammensetzung, die einen Triethanolamin-Puffer in einer Menge im Bereich von 0,02 Gew.-% bis 3 Gew.-% und ein oder mehr antimikrobielle Wirkstoffe ausgewählt aus der Gruppe bestehend aus Poly(hexamethylenbiguanid) und 1,1'-Hexamethylen-bis[5-(2-ethylhexyl)biguanid] und Polyquaternium-1 umfasst.

2. Verfahren zur Herstellung einer Zusammensetzung gemäß Anspruch 1, umfassend:
Kombinieren eines Triethanolamin-Puffers mit einem oder mehr ausgewählten, antimikrobiellen Wirkstoffen.

3. Zusammensetzung gemäß Anspruch 1, die ferner ein oder mehr zusätzliche Puffer oder Puffersysteme umfasst.

4. Zusammensetzung gemäß einem der Ansprüche 1 und 3, die ferner ein oder mehr Tonizitätsmittel umfasst.

5. Zusammensetzung gemäß einem der Ansprüche 1, 3 und 4, die ferner ein oder mehr Tensid(e) umfasst.

6. Zusammensetzung gemäß einem der Ansprüche 1, 3, 4 und 5, die ferner ein oder mehr Viskositätsmittel umfasst.

7. Verfahren zur Verwendung der Zusammensetzung gemäß einem der Ansprüche 1, 3, 4, 5 und 6, umfassend:
das Inkontaktbringen einer Oberfläche einer Kontaktlinse mit der genannten Zusammensetzung für eine Zeitdauer, die geeignet ist, eine mikrobielle Belastung auf der genannten Kontaktlinse zu beseitigen.

8. Verfahren zur Herstellung der Zusammensetzung gemäß einem der Ansprüche 1, 3, 4, 5 und 6, umfassend:
Zugabe einer wirksamen desinfizierenden Menge der genannten ein oder mehr antimikrobiellen Wirkstoffe und Triethanolamin-Puffer zu der Zusammensetzung.

9. Verfahren zur Herstellung einer Zusammensetzung gemäß einem der Ansprüche 1, 3, 4, 5 und 6, umfassend:
Zugabe einer wirksamen konservierenden Menge der genannten ein oder mehr antimikrobiellen Wirkstoffe und des genannten Triethanolamin-Puffers zu der Zusammensetzung.

10. Verfahren zur Verwendung der Zusammensetzung gemäß einem der Ansprüche 1, 3, 4, 5 und 6, umfassend:
das Inkontaktbringen einer Oberfläche eines medizinischen Gerätes mit der genannten Zusammensetzung für eine Zeitdauer, die geeignet ist, eine mikrobielle Belastung auf dem genannten medizinischen Gerät zu beseitigen.

## Revendications

1. Composition antimicrobienne comprenant un tampon triéthanolamine en une quantité dans la plage de 0,02 % en poids à 3 % en poids et un ou plusieurs agents antimicrobiens choisis dans le groupe constitué par le poly(hexaméthylène biguanide) et le 1,1'-hexaméthylène-bis[5-(2-éthylhexyl)biguanide] et le polyquaternium-1.

2. Procédé de production d'une composition selon la revendication 1 qui comprend :
la combinaison du tampon triéthanolamine avec un ou plusieurs agents antimicrobiens choisis.

3. Composition selon la revendication 1, qui comprend en outre un ou plusieurs tampons ou systèmes tampons supplémentaires.

4. Composition selon l'une quelconque des revendications 1 à 3, qui comprend en outre un ou plusieurs agents de tonicité.

5. Composition selon l'une quelconque des revendications 1, 3 et 4, qui comprend en outre un ou plusieurs surfactants.

6. Composition selon l'une quelconque des revendications 1, 3, 4 et 5 qui comprend en outre un ou plusieurs agents de viscosité.

7. Procédé d'utilisation de la composition selon l'une quelconque des revendications 1, 3, 4, 5 et 6, qui comprend :
la mise en contact d'une surface d'une lentille de contact avec ladite composition pendant une durée adaptée pour éliminer une charge microbienne sur ladite lentille de contact.

8. Procédé de production de la composition selon l'une quelconque des revendications 1, 3, 4, 5 et 6, qui comprend :
l'ajout d'une quantité efficace pour la désinfection dudit ou desdits agents antimicrobiens et du tampon triéthanolamine à la composition.

9. Procédé de production de la composition selon l'une quelconque des revendications 1, 3, 4, 5 et 6, qui comprend :
l'ajout d'une quantité efficace pour la conservation dudit ou desdits agents antimicrobiens et dudit tampon triéthanolamine à la composition.

10. Procédé d'utilisation de la composition selon l'une quelconque des revendications 1, 3, 4, 5 et 6, qui comprend :
la mise en contact d'une surface d'un dispositif médical avec ladite composition pendant une durée adaptée pour éliminer une charge microbienne sur ledit dispositif médical.
